(19) **Europäisches Patentamt / European Patent Office / Office européen des brevets**

(11) **EP 4 354 099 B1**

(12) **EUROPEAN PATENT SPECIFICATION**

(45) Date of publication and mention of the grant of the patent:
**25.03.2026 Bulletin 2026/13**

(21) Application number: **21945112.7**

(22) Date of filing: **09.06.2021**

(51) International Patent Classification (IPC):
***G01H 9/00*** (2006.01)

(52) Cooperative Patent Classification (CPC):
**G01H 9/004**

(86) International application number:
**PCT/JP2021/021990**

(87) International publication number:
**WO 2022/259436 (15.12.2022 Gazette 2022/50)**

(54) **SIGNAL PROCESSING DEVICE, VIBRATION DETECTION SYSTEM, AND SIGNAL PROCESSING METHOD**

SIGNALVERARBEITUNGSVORRICHTUNG, VIBRATIONSERKENNUNGSSYSTEM UND SIGNALVERARBEITUNGSVERFAHREN

DISPOSITIF DE TRAITEMENT DE SIGNAL, SYSTÈME DE DÉTECTION DE VIBRATION ET PROCÉDÉ DE TRAITEMENT DE SIGNAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.04.2024 Bulletin 2024/16**

(73) Proprietor: **NTT, Inc.**
**Tokyo 100-8116 (JP)**

(72) Inventors:
• **WAKISAKA, Yoshifumi**
  **Musashino-shi, Tokyo 180-8585 (JP)**
• **IIDA, Daisuke**
  **Musashino-shi, Tokyo 180-8585 (JP)**
• **KOSHIKIYA, Yusuke**
  **Musashino-shi, Tokyo 180-8585 (JP)**
• **HONDA, Nazuki**
  **Musashino-shi, Tokyo 180-8585 (JP)**

(74) Representative: **v. Bezold & Partner**
**Patentanwälte - PartG mbB**
**Ridlerstraße 57**
**80339 München (DE)**

(56) References cited:
**WO-A1-2021/075015     WO-A1-2021/075015**
**JP-A- 2017 026 503     JP-A- 2017 026 503**

• **WAKISAKA YOSHIFUMI ET AL: "Distortion-Suppressed Sampling Rate Enhancement in Phase-OTDR Vibration Sensing with Newly Designed FDM Pulse Sequence for Correctly Monitoring Various Waveforms", 2020 OPTICAL FIBER COMMUNICATIONS CONFERENCE AND EXHIBITION (OFC), OSA, 8 March 2020 (2020-03-08), pages 1 - 3, XP033767147, DOI: 10.1364/OFC.2020.TH3F.5**
• **WANG FENG ET AL: "Measuring Very Low Frequency with Phase-OTDR Assisted by an Auxiliary Interferometer", 2018 CONFERENCE ON LASERS AND ELECTRO-OPTICS PACIFIC RIM (CLEO-PR), OSA, 29 July 2018 (2018-07-29), pages 1 - 2, XP033542566, [retrieved on 20190425]**
• **WAKISAKA, YOSHIFUMI ET AL.: "Distortion-suppressed sampling rate enhancement in phase-OTDR vibration sensing with newly designed FDM pulse sequence for correctly monitoring various waveforms", 2020 OPTICAL FIBER COMMUNICATIONS CONFERENCE AND EXHIBITION(OFC, 8 March 2020 (2020-03-08), pages 1 - 3, XP033767147, DOI: 10.1364/OFC.2020.Th3F.5**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

• IIDA, DAISUKE ET AL.: "Distributed measurement of acoustic vibration location with frequency multiplexed phase-OTDR", OPTICAL FIBER TECHNOLOGY, vol. 36, 21 February 2017 (2017-02-21), pages 19 - 25, XP085114643, DOI: 10.1016/j.yofte.2017.02.005

**Description**

Technical Field

The present disclosure relates to a signal processing device and a signal processing method for processing a signal obtained by performing DAS-P, and a vibration detection system including the signal processing device.

Background Art

For general prior art, reference is made to Patent Literature 2. The document discloses a vibration distribution measurement method for measuring the reflectance distribution of back-scattering light from a plurality of optical fibers to be tested. An optical frequency control procedure sets a time interval at a frequency lower than the reciprocal of the maximum value in the predetermined measurement frequency range between testing light beams having different frequencies and constitutes a pulse train having the time interval. An arithmetic processing procedure compares each phase distribution waveform of the back-scattering light for each light reception time from the plurality of optical fibers to be tested, into which a testing light beam having a pulse train constituted by an operation frequency control procedure is incident, and extracts a change variation of a phase of the back-scattering light from each point of the optical fiber to be tested from a comparison result so that the vibration position of the optical fiber to be tested and the frequency of the vibration position are detected.

As a means for measuring physical vibration, applied to an optical fiber, in a distributed manner in a longitudinal direction of the optical fiber, there is a known method called distributed acoustic sensing (DAS) by which pulsed test light is injected into a measurement target optical fiber and backscattered light resulting from Rayleigh scattering is detected (Non Patent Literature 1).

In DAS, vibration sensing is performed by capturing changes, in the optical path length of an optical fiber, resulting from physical vibration applied to the optical fiber. By detecting vibration, it is possible to detect movement or the like of an object around the measurement target optical fiber.

As a method for detecting backscattered light in DAS, there is a technique for measuring the intensity of light scattered from each point on the measurement target optical fiber, and observing temporal changes in the intensity of the scattered light. This technique is called DAS-intensity (DAS-I). Although DAS-I characteristically simplifies the device configuration, it is impossible to quantitatively calculate a change in the optical path length of a fiber, resulting from vibration, on the basis of the scattered light intensity, and therefore, DAS-I is a qualitative measurement method (Non Patent Literature 2).

On the other hand, DAS-phase (DAS-P), which is a technique for measuring the phase of light scattered from each point on the measurement target optical fiber and observing temporal changes in the phase, has also been researched and developed. Although the device configuration and the signal processing in DAS-P are more complicated than those in DAS-I, a phase changes linearly with respect to changes, in the optical path length of a fiber, resulting from vibration, and the rate of change is also uniform in the longitudinal direction of the optical fiber. Thus, vibration can be quantitatively measured, and the vibration applied to the measurement target optical fiber can be faithfully reproduced (Non Patent Literature 2, for example).

In measurement by DAS-P, pulsed light is injected into the measurement target optical fiber, and the phase of scattered light at a time t for injecting the pulsed light is measured, in a distributed manner, in the longitudinal direction of the optical fiber. That is, the phase $\theta(l, t)$ of the scattered light is measured, with the distance from the incidence end of the optical fiber set to a distance l. The pulsed light is repeatedly injected into the measurement target optical fiber at time intervals T, so that the temporal change $\theta(l, nT)$ in the phase of the scattered light at time t = nT (n being an integer) is measured at each point in the longitudinal direction of the measurement target optical fiber. In practice, however, the time for measuring at the point of the distance 1 is later than the time for injecting the pulse by the time during which the pulsed light propagates from the incidence end to the distance 1. Further, it should be noted that the time at which a measuring instrument measures is delayed by the time required for the scattered light to return to the incidence end. It is known that the magnitude of physical vibration applied to the section from the distance 1 to a distance l+δl at each time nT is proportional to the difference $\delta\theta(l, nT)$ between the phase $\theta(l+\delta l, nT)$ at the distance l+δl and the phase $\theta(l, nT)$ at the distance 1. That is, the expression shown below is satisfied when time zero is the reference time.
[Math. 1]

$$(\text{Magnitude of vibration}) \propto \delta\theta(l, nT) - \delta\theta(l, 0)$$

$$= [\theta(l + \delta l, nT) - \theta(l, nT)] - [\theta(l + \delta l, 0) - \theta(l, 0)]$$

$$= [\theta(l + \delta l, nT) - \theta(l + \delta l, 0)] - [\theta(l, nT) - \theta(l, 0)] \quad (1)$$

As device configurations for detecting the phase of scattered light, there are a direct detection configuration that directly detects backscattered light from the measurement target optical fiber with a photodiode or the like, and a configuration that uses coherent detection to detect backscattered light multiplexed with separately prepared reference light (Non Patent Literature 1, for example).

Mechanisms for performing coherent detection and calculating a phase are specifically classified into two kinds, which are a mechanism for software-based processing using Hilbert transform, and a mechanism for hardware-based processing using a 90-degree optical hybrid. In both kinds of methods, an in-phase component I(l, nT) and a quadrature component Q(l, nT) of scattered light are acquired, and the phase is calculated according to the expression shown below.
[Math. 2]

$$\theta_{cal}(l, nT) = \text{Arctan}\left[\frac{Q(l, nT)}{I(l, nT)}\right] \quad (2)$$

However, an output value by the four-quadrant arctangent operator Arctan is within the range of (-n, $\pi$] in radians, and $2mn + \theta(l, nT)$ all have the same vector direction in an x-y plane (m being an integer), and accordingly, the uncertainty of $2m\pi$ exists in $\theta_{cal}(l, nT)$ calculated as above. Therefore, as a more accurate evaluation method for $\theta(l, nT)$, signal processing such as phase unwrapping is further performed. Given that the phase after unwrapping is represented by $\theta_{cal}^{unwrap}$ in general phase unwrapping, in processing in ascending order of time, for example, $\theta_{cal}^{unwrap}$ is set to the same as $\theta_{cal}$ at the start point of the phase unwrapping, and $\theta_{cal}^{unwrap}(l, pT)$ to $\theta_{cal}^{unwrap}(l, (p+1)T)$ are then sequentially calculated as shown below, with p representing an integer.

On condition that

[Math. 2-1]

$$\left|\theta_{cal}(l, (p + 1)T) - \theta_{cal}^{unwrap}(l, pT)\right|$$

is more than the $\pi$ radian,
an appropriate integer q is selected so that

[Math. 2-2]

$$\left|\theta_{cal}(l, (p + 1)T) + 2\pi q - \theta_{cal}^{unwrap}(l, pT)\right|$$

is equal to or smaller than the $\pi$ radian, and the phase $\theta_{cal}^{unwrap}(l, (p+1)T)$ after the unwrapping is sequentially calculated as follows.
[Math. 3]

$$\theta_{cal}^{unwrap}(l, (p + 1)T) = \theta_{cal}(l, (p + 1)T) + 2\pi q \quad (3)$$

The superscript "unwrap" indicates a phase after unwrapping. Note that, as the calculation procedures in actual distributed vibration measurement, a phase unwrapping process is often performed on a difference, calculated in advance, in phase value between points as in Expression (1).

In measurement by DAS, there is noise of the measuring instrument, such as thermal noise of a photodiode (PD) for detecting light, noise at the subsequent electrical stage, or shot noise caused by light. Therefore, the intensity and the phase of the scattered light to be measured are also affected by the noise of the measuring instrument.

In particular, when the phase of scattered light is measured, the large influence of noise of the measuring instrument increases not only the uncertainty of the phase, but also the probability of a measurement value being significantly different from the ideal phase value to be obtained in the absence of noise.

For example, as for the vector of measured scattered light in a system where the in-phase component is represented by the abscissa axis and the quadrature component is represented by the ordinate axis in coherent detection, the direction of the vector of no noise corresponds to the phase to be measured. However, when the influence of noise is large, the vector is directed in the opposite direction, which increases the probability that a difference between the phase value to be actually measured and the ideal phase value of no noise is about the $\pi$ radian. Such an aspect leads to erroneous recognition that a large physical force has been applied to the optical fiber, when the magnitude of vibration is calculated according to Expression (1). Also, when the influence of noise becomes large, the number of points at which the integer q is erroneously selected increases in the unwrapping process shown in Expression (3), and a phase value difference of $2\pi$ or larger, which is not actually present, appears between the front and rear of the point of the erroneous selection. Such a phase value difference also leads to erroneous recognition that a large physical force has been applied to the optical fiber, when the magnitude of vibration is calculated according to Expression (1).

To accurately measure the phase, it is necessary to reduce the influence of noise of the measuring instrument. The influence of noise of the measuring instrument is increased by decreasing the intensity of scattered light, as long as the noise of the measuring instrument can be regarded as the same level at each point and each time. Accordingly, increasing the intensity of scattered light at each point and each time can reduce the influence of noise of the measuring instrument.

The reason why the intensity of scattered light drops is not only the loss caused by the absorption and the scattering accompanying the propagation of pulsed light as a probe in the measurement target optical fiber. Since pulsed light having a finite duration is injected into the measurement target optical fiber to detect scattering of the pulsed light, the scattered light is interfered with by a large number of scattered substances very finely distributed in the measurement target optical fiber. As a result of the interference, a point at which the intensity of the scattered light drops appears, depending on the distribution of the scattered substances in the longitudinal direction of the measurement target optical fiber at each time. This phenomenon is called fading (Non Patent Literature 3).

Therefore, when the phase of scattered light in DAS-P is measured, there is a problem of appearing a point at which the intensity of scattered light drops at each time due to fading, as a result of reduction of the influence of noise of the measuring instrument.

As a means for solving the problem, there is a method for increasing the peak intensity of the light pulse to be simply injected. However, when the peak intensity is increased, a nonlinear effect occurs, and the characteristics of the pulsed light change in response to the propagation in the measurement target optical fiber. Because of this, the peak intensity of the light pulse allowed to be injected is limited, and the above problem is not sufficiently solved in some cases.

To solve the above problem, there are a suggested phase measurement method and a suggested signal processing device capable of reducing the influence of noise of a measuring instrument without any increase in the peak intensity of the incident light pulse in measuring the phase of scattered light in DAS-P (Patent Literature 1).

According to Patent Literature 1, to solve the above problem, pulsed light, obtained by arraying and wavelength-multiplexing pulses with different optical frequency components at time intervals at which changes in the fiber state resulting from vibration are negligible, is injected into the measurement target optical fiber, scattered light vectors are created by plotting scattered light with the respective wavelengths from the measurement target optical fiber in a two-dimensional plane in which the in-phase components are represented by the abscissa axis and the quadrature components are represented by the ordinate axis, directions of the created scattered light vectors are matched by rotating the created scattered light vectors for each wavelength at each point on the measurement target optical fiber, a new vector is generated by averaging the vectors having the directions matched, and a phase is calculated from the values of the in-phase component and the quadrature component of the generated new vector.

In the measurement by DAS-P, there is also a problem of trade-off between the measurement distance and the measurable upper limit of the vibrational frequencies. When a light pulse of a single frequency is used, the long measurement distance delays the time at which scattered light returns from the far end, with respect to the pulse incident time. Therefore, there is the upper limit of the repetition frequency at which light pulses are injected so that the scattered light from the far end and the scattered light from the vicinity of the incidence end obtained by injecting the next light pulse are not multiplexed and do not interfere with each other. In view of this, from the sampling theorem, vibration of vibrational frequencies higher than the Nyquist frequency, which is 1/2 of the repetition frequency, cannot be correctly measured due to aliasing.

Non Patent Literature 4 has been suggested as a method for solving the above problem. According to Non Patent Literature 4, to solve the above problem, pulsed light obtained by arraying pulses with different optical frequency components at equal intervals and performing wavelength-multiplexing thereon is injected into the measurement target optical fiber, and scattered light with the respective wavelengths from the measurement target optical fiber is plotted in a two-dimensional plane in which the in-phase components are represented by the abscissa axis and the quadrature components are represented by the ordinate axis, to create scattered light vectors. The phase is calculated from the obtained scattered light vectors. Given that the sampling rate upper limit determined from the measurement distance on condition of a single optical frequency is represented by $f_s$, the sampling rate upper limit can be $N \times f_s$ by N-wave multiplexing. Note that the wavelength multiplexing number "N" is a natural number.

Here, in implementing the frequency multiplexing method disclosed in Non Patent Literature 4, when a phase change is calculated by simply combining the angles of the scattered light vectors obtained at the respective optical frequencies without correcting the angular difference between the respective optical frequencies, the calculated phase change is distorted compared with the actual phase change, and an accurate vibrational waveform cannot be measured. To counter this problem, Non Patent Literature 4 suggests a method for correctly estimating the frequency of a signal having a vibrational frequency exceeding the Nyquist frequency $f_v$ on condition of the single frequency, by first calculating the temporal phase difference of the respective optical frequencies and then combining the calculated phase differences of the respective optical frequencies. That is, it is possible to estimate frequencies up to the frequency $N \times f_v$ without aliasing. By this suggested technique, however, the angular differences between the respective optical frequencies are not obtained, and therefore, any vibrational waveform cannot be measured.

As a countermeasure for this problem, Non Patent Literature 5 suggests a measurement method capable of measuring a vibrational waveform under the condition that the sampling rate upper limit is increased to $N \times f_s$, by correcting the angular differences between the respective optical frequencies using a correction frequency. By the suggested method, a compensation optical frequency is used in addition to the main optical frequencies to improve the sampling rate, and a probe pulse train is used such that a component regarding a main optical frequency and a component regarding the compensation optical frequency regularly are injected into the measurement target fiber at timings allowed to be regarded as the same. Thus, the angular difference between the component regarding the main optical frequency and the component regarding the compensation optical frequency is corrected, and the angular differences between the respective main optical frequencies are corrected.

Further, in the trade-off between the measurement distance and the upper limit of the measurable vibrational frequencies, a more severe requirement is added, because phase unwrapping needs to be performed correctly. When the absolute value of the magnitude of the phase change, with adjacent light pulses subjected to sampling, changes by more than $\pi$, phase unwrapping cannot be uniquely performed, which leads to failed phase unwrapping (Non Patent Literature 6).

Therefore, there is a constraint that the upper limit of the absolute value of the magnitude of a phase change at adjacent sampling points is n. Even within the range of the Nyquist frequency or lower, as the vibrational frequency becomes higher, the phase change at adjacent sampling points becomes larger. Therefore, when the vibration amplitude becomes larger, a further requirement is added to the upper limit of the measurable vibrational frequencies. By the suggested method disclosed in Non Patent Literature 5, a vibrational waveform can be measured, and accordingly, this method is also effective in alleviating such constraints.

Non Patent Literature 5 also suggests an optical frequency pulse forming method and a reception signal processing method for simultaneously implementing a frequency multiplexing method by which pulses with different optical frequencies are injected at different times so as to improve the sampling rate, and the frequency multiplexing method disclosed in Patent Literature 1 as a countermeasure against fading.

Note that the relationship between the magnitude of a phase change and the amount of distortion applied to a fiber by vibration is explained in Non Patent Literature 7, for example. According to Non Patent Literature 7, when a fiber having an entire length 1 is elongated by $\Delta 1$ due to a distortion amount $\varepsilon$, the increase amount $\Delta\phi$ of the phase change resulting from the elongation by $\Delta 1$ in light passing is shown in the expression below.

[Math. 4]

$$\Delta\varphi = \varepsilon l \left[ k - \frac{1}{2} k n^2 \left( (1 - \mu_p) p_{12} - \mu p_{11} \right) \right] \qquad (4)$$

Here, $k = 2\pi n/\lambda$ represents the propagation constant, n represents the effective refractive index of the fiber, $\mu_p$ represents the Poisson's ratio, and $p_{11}$ and $p_{12}$ represent the strain-optic tensor components. For example, given $\lambda = 1555$ nm near a normal communication wavelength band, $n = 1.47$, $\mu_p = 0.17$, $p_{11} = 0.121$, and $p_{12} = 0.271$. Therefore, it is known that the following expression is satisfied (Non Patent Literature 8).

[Math. 5]

$$\Delta\varphi = K\varepsilon l \qquad (5)$$

Here, K = 4.6 × 10⁶ m⁻¹. Using this relational expression, it is possible to replace the requirement for the magnitude of a phase change with the requirement for a distortion amount.

In the frequency multiplexing system disclosed in Non Patent Literature 5, the total number of usable optical frequencies obtained by combining the multiplexing number allocated to improvement of the sampling rate and the multiplexing number allocated to reduction of fading noise can be evaluated as the number obtained by dividing the total usable frequency bandwidth determined from the sampling rate of an analog/digital (A/D) converter (hereinafter also referred to as an AD board circumstantially) that converts an analog signal into a digital signal by the occupied bandwidth per component determined from the pulse width of each optical frequency component, and is finite. Therefore, the multiplexing number allocated to reduction of fading noise decreases in a situation where the multiplexing number allocated to improvement of the sampling rate increases due to detecting high-frequency vibration or the like, where the total usable frequency bandwidth is limited by need to use an AD board with a small sampling rate, or where measurement with high spatial resolution needs to be performed, and the occupied bandwidth per component increases to reduce the pulse width of each optical frequency component.

When the multiplexing number allocated to reduction of fading noise becomes smaller, the correction of the angular difference between the respective main optical frequencies described in Background Art cannot be completely performed, the angular difference between the respective main optical frequencies remains, and a point where the calculated phase change remains distorted with respect to the actual phase change appears. When the remaining angular difference between the main optical frequencies is large, phase connection errors also increase. Furthermore, when a compensation optical frequency is injected, crosstalk into the main optical frequencies occurs due to the compensation optical frequency, and distortion associated with the crosstalk also occurs. The phase connection errors associated with the distortion also becomes a problem.

Citation List

Patent Literature

Patent Literature 1: JP 2020-169904 A
Patent Literature 2: JP 2017-26503 A

Non Patent Literature

Non Patent Literature 1: Ali. Masoudi, T. P. Newson, "Contributed Review: Distributed optical fibre dynamic strain sensing." Review of Scientific Instruments, vol.87, pp011501 (2016)
Non Patent Literature 2: Ken'ichi Nishiguchi, Li Che-Hsien, Artur Guzik, Mitsunori Yokoyama, Kinzo Kishida, "Fabrication of Fiber-Optic Distributed Acoustic Sensor and Its Signal Processing", IEICE Technical Report, 115(202), pp29-34 (2015)
Non Patent Literature 3: G. Yang et al., "Long-Range Distributed Vibration Sensing Based on Phase Extraction from Phase-Sensitive OTDR," IEEE Photonics Journal, vol. 8, no. 3, 2016.
Non Patent Literature 4: D., Iida, K., Toge, T., Manabe: 'Distributed measurement of acoustic vibration location with frequency multiplexed phase-OTDR', Opt. Fiber Technol., 2017, 36, pp 19-25, DOI:10.1016/j.yofte.2017.02.005
Non Patent Literature 5: Y. Wakisaka, D. Iida and H. Oshida, "Distortion-Suppressed Sampling Rate Enhancement in Phase-OTDR Vibration Sensing with Newly Designed FDM Pulse Sequence for Correctly Monitoring Various Waveforms," 2020 Optical Fiber Communications Conference and Exhibition (OFC), San Diego, CA, USA, 2020, pp. 1-3.
Non Patent Literature 6: Maria Rosario Fernandez-Ruiz, Hugo F. Martins, "Steady-Sensitivity Distributed Acoustic Sensors," J. Lightwave Technol. 36, 5690-5696 (2018)
Non Patent Literature 7: C. D. Butter and G. B. Hocker, "Fiber optics strain gauge," Appl. Opt. 17, 2867-2869 (1978)
Non Patent Literature 8: A E Alekseev et al., "Fidelity of the dual-pulse phase-OTDR response to spatially distributed external perturbation," Laser Phys. 29 055106 (2019)

Summary of Invention

Technical Problem

The present disclosure aims to remove the influence of an uncorrected angular difference, even in a state where the multiplexing number allocated to reduction of fading noise is small and the angular difference between the respective main optical frequencies is completely uncorrectable.

Solution to Problem

The present disclosure suggests a method for removing, in a state where correction of the angular difference between the respective main optical frequencies cannot be completely performed, and where the angular difference between the respective main optical frequencies remains, the influence of the remaining angular difference by means of signal processing, to decrease phase connection errors and the like, and thus, make the calculated phase change closer to the actual phase change.

Specifically, according to the present disclosure, in a frequency-multiplexed phase OTDR, a component $D(l, mT_N)$ regarding a period $NT_N$, which is extracted with $\delta\theta_0^{unwrap}(l, mT_N)$, obtained by performing a phase connection process on a phase change $\delta\theta_0(l, mT_N)$ caused in the section of a distance 1 to a distance $l+\delta l$ from the incidence end, filtered through a multi-bandpass filter, is subtracted from $\delta\theta_0(1, mT_N)$ .

Specifically, by a signal processing device and a signal processing method of the present disclosure,

a signal obtained by repeatedly injecting a plurality of light pulses with different optical frequencies into an optical fiber and by performing distributed acoustic sensing-phase (DAS-P) is acquired,
a phase change, caused by vibration applied to a section of the optical fiber is calculated using the acquired signal,
a component regarding a repetition period of the same optical frequency of the plurality of light pulses is removed from the calculated phase change; and
the vibration applied to the section of the optical fiber is calculated, using a phase change obtained by removing the component regarding the period.

Specifically, a vibration detection system of the present disclosure includes:

a measuring instrument that injects a plurality of light pulses with different optical frequencies into one end of an optical fiber, and receives scattered light with the respective wavelengths returned to the one end of the optical fiber; and
the signal processing device of the present disclosure, which calculates the vibration applied to the section of the optical fiber, using a signal from the measuring instrument.

A program of the present disclosure is a program for getting a computer to function as the individual functional units included in the signal processing device according to the present disclosure, and is a program for getting the computer to carry out the individual steps included in the signal processing method implemented in the signal processing device according to the present disclosure.

Advantageous Effects of Invention

According to the present disclosure, the influence of an uncorrected angular difference can be removed, even in a state where the multiplexing time allocated to reduction of fading noise is small and the angular difference between the respective main optical frequencies is completely uncorrectable.

Brief Description of Drawings

Fig. 1 is a diagram for explaining a vibration detection device that performs vibration detection by DAS-P according to an embodiment.
Fig. 2 illustrates an example configuration of a pulse pattern.
Fig. 3 illustrates an example of a phase change distortion correction method.
Fig. 4 illustrates an example of a method for correcting distortion accompanying crosstalk.

Description of Embodiments

The following is a detailed description of an embodiment of the present disclosure, with reference to the drawings.

Note that the present disclosure is not limited to the embodiment described below. These embodiment are merely an example, and the present disclosure can be carried out in forms with various modifications and improvements based on the knowledge of those skilled in the art. Note that components denoted by the same reference numeral in this specification and the drawings are the same as each other.

Note that the present disclosure is effective as a process of removing an angular difference, not only in a state where a process of removing distortion is performed with the use of a compensation optical frequency as disclosed in Non Patent Literature 5 before the signal processing, to be performed, suggested by the present disclosure, but also in a state where the angular difference between the respective main optical frequencies completely remains with no compensation optical frequency used. The present disclosure also suggests a method for reducing distortion caused by crosstalk resulting from a compensation optical frequency in a state where the compensation optical frequency disclosed in Non Patent Literature 5 is used.

(First Embodiment)

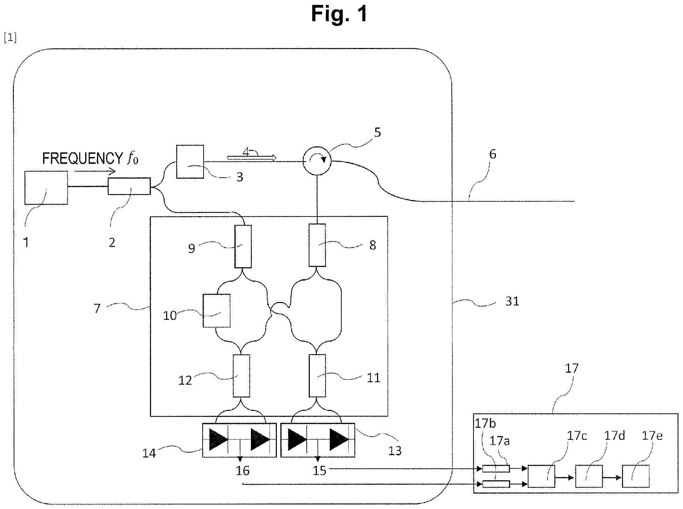

Fig. 1 is a diagram for explaining a vibration detection system that performs vibration detection by DAS-P according to this embodiment. The vibration detection system includes: a light source that injects a frequency-multiplexed light pulse train into one end of the measurement target optical fiber; a light receiver that receives scattered light of each wavelength returned to the one end of the measurement target optical fiber; and a signal processing unit that observes vibration of the measurement target optical fiber as a temporal change in the phase component of the scattered light.

A CW light source 1, a coupler 2, and an optical modulator 3 correspond to the light source. A 90-degree optical hybrid 7 and balance detectors (13 and 14) correspond to the light receiver. The light receiver performs coherent detection, using the 90-degree optical hybrid 7. A signal processing device 17 corresponds to the signal processing unit. However, it is not always necessary to use a 90-degree optical hybrid for the reception system, and some other device or signal processing may be used, as long as an in-phase component and a quadrature component of scattered light can be measured. The signal processing device of the present disclosure can also be implemented in a computer and a program, and the program can be recorded on a recording medium or be provided through a network.

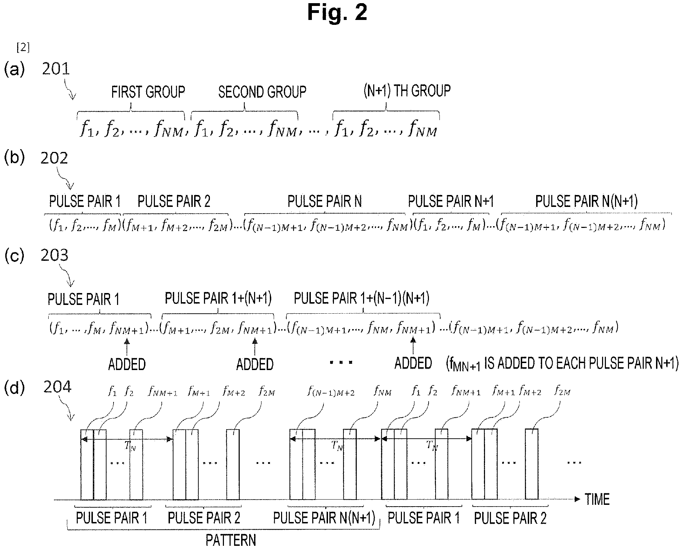

A measuring instrument 31 measures scattered light from a measurement target optical fiber 6 as follows. Continuous light with a single wavelength that is an optical frequency $f_0$ is emitted from the CW light source 1, and is split into reference light and probe light by the coupler 2. The probe light is shaped into a wavelengthmultiplexed light pulse 4 by the optical modulator 3. As the light pulse 4, a multiple pulse using a compensation optical frequency as disclosed in Non Patent Literature 5 can be used. The light pulse 4 may be of any kind as long as a compensation method as disclosed in Non Patent Literature 5 can be achieved. An example configuration thereof is illustrated in Fig. 2.

$N \times M$ optical frequency components $f_1$ to $f_{NM}$ are to be used for the main pulse, and N+1 groups of them arranged in order are prepared (201). The whole sequence is divided by M (M being a natural number) as illustrated by 202, and N(N+1) pulse pairs are generated. A compensation optical frequency $f_{NM+1}$ is added to each of the N+1 pulse pairs in 202, to generate pulse pairs 203. The light pulse pairs to be actually injected on the basis of the pulse pairs 203 are designed as illustrated by 204. As a result, a pulse pattern in which N(N+1) pulse pairs are arranged at constant time intervals is generated.

Here, the compensation optical frequency $f_{NM+1}$ is added to the pulse pairs having the pulse pair number 1+k(N+1) (k = 0, 1, ..., (N-1)). Accordingly, given N = 3, and M = 1, for example, the pulse pairs having optical frequencies $f_1$, $f_2$, and $f_3$ are repeatedly injected into the measurement target optical fiber 6. In this example, when k = 0, a compensation optical frequency $f_4$ is added to the pulse pairs including the optical frequency $f_1$. When k = 1, the optical frequency $f_4$ is added to the pulse pairs including the optical frequency $f_2$. When k = 2, the optical frequency $f_4$ is added to the pulse pairs including the optical frequency $f_3$.

Given that the interval between pulse pairs is $T_N$, the period of the pulse pattern is $N(N+1)T_N$. The limitation on the minimum value, as small as possible, of $T_N$ depending on the length of the measurement target optical fiber 6 is lowered to 1/N times of a limitation where a single frequency pulse is used. Also, in the configuration in Fig. 2, fading noise can be reduced with M pulses present in each pulse pair. Note that the pulse pairs 203 correspond to a state where there is one compensation optical frequency, but a plurality of compensation optical frequencies may be multiplexed for fading reduction.

In Fig. 1, the kind of the optical modulator 3 is not specifically designated as long as the light pulse 4 can be generated, and may include a plurality of optical modulators. For example, a single sideband (SSB) modulator, a frequency-variable acousto-optics (AO) modulator, or the like may be used, or intensity modulation may be further performed by a semiconductor optical amplifier (SOA) or the like to increase the extinction ratio in pulsing. Note that the pulses with the respective optical frequency components illustrated in 204 each have a rectangular waveform shape, but waveforms that are not rectangular can also be used.

The light pulse 4 is injected into the measurement target optical fiber 6 via a circulator 5. Light scattered at each point in the longitudinal direction of the measurement target optical fiber 6 returns to the circulator 5 as backscattered light, and is injected into one input portion of the 90-degree optical hybrid 7. The reference light split by the coupler 2 is injected into the other input portion of the 90-degree optical hybrid 7.

The internal configuration of the 90-degree optical hybrid 7 may be any configuration that has the functions of a 90-degree optical hybrid. An example configuration is illustrated in Fig. 1. The backscattered light is injected into a coupler 8 having a branch ratio of 50 : 50, and the scattered light split into two light beams injected into input portions of a coupler 12 having a branch ratio of 50 : 50 and a coupler 11 having a branch ratio of 50 : 50. The reference light is injected into a coupler 9 having a branch ratio of 50 : 50, and one light beam of the reference light, split into two light beams, is injected into an input portion of the coupler 11, and the other is injected into an input portion of the coupler 12 via phase shift of $\pi/2$ using a phase shifter 10.

The two outputs of the coupler 11 are detected by the balance detector 13, and an electrical signal 15 that is an analog in-phase component $I^{analog}$ is output. The two outputs of the coupler 12 are detected by the balance detector 14, and an electrical signal 16 that is an analog quadrature component $Q^{analog}$ is output.

The electrical signal 15 and the electrical signal 16 are sent to the signal processing device 17 that includes an AD conversion element 17a and an AD conversion element 17b capable of sampling the optical frequency bands of signals without aliasing. In the signal processing device 17, the digitized signals of the in-phase component $I^{digital}$ and the quadrature component $Q^{digital}$ output from the AD conversion element 17a and the AD conversion element 17b are separated by a signal processing unit 17c into signals with the respective bands of optical frequencies $f_0+f_i$ (i = 1, 2, ..., NM+1) constituting the light pulse 4. As a specific signal processing method, any method may be used, as long as $I_i^{measure}$ (i = 1, 2, ..., NM+1) and $Q_i^{measure}$ (i = 1, 2, ..., NM+1), which are signals with the respective bands, can be accurately separated from $I^{digital}$ and $Q^{digital}$. For example, a calculation method for compensating for a phase delay by filtering $I^{digital}$ and $Q^{digital}$ through a bandpass filter whose center frequency is $f_0+f_i$ can be used. Given that the pulse width of each optical frequency component is represented by W, the passband can be set to 2/W. Alternatively, after the in-phase component and the quadrature component in an analog electrical signal state are separated into optical frequency components by an analog electrical filter, AD conversion may be performed by the AD conversion element 17a and the AD conversion element 17b.

A signal processing unit 17d performs phase calculation, on the basis of $I_i^{measure}$ and the $Q_i^{measure}$ acquired by the signal processing unit 17c. First, a complex vector $r_i$ is created on an x-y plane in which the in-phase component is represented by the x-axis (real number axis) and the quadrature component is represented by the y-axis (imaginary number axis).

[Math. 1-1]

$$r_i = \left( I_i^{measure}, \quad Q_i^{measure} \right) \qquad (1-1)$$

The time at which the top of the pulse pair k is injected is expressed as $k \times T_N + n \times N \times T_N$ (n being an integer). Taking the optical frequency at the top of each pulse pair as a reference wavelength, the vectors, calculated in Expression (1-1) in the bands of M different optical frequencies excluding the compensation optical frequencies constituting the pulse pairs, are averaged by the method disclosed in Patent Literature 1, and thus, the phase at the position at a distance z from the incidence end is calculated. The state of the measurement target optical fiber 6 at the position at the distance z from the incidence end in the longitudinal direction of the measurement target optical fiber 6 is measured at time $k \times T_N + n \times N \times T_N + z/v$ (n being an integer), with the propagation time of the light pulse being taken into consideration. Here, $v$ represents the speed of light in the measurement target optical fiber 6. Further, with the time required for scattered light to propagate back to the incidence end being taken into consideration, the measurement time at the measuring instrument is expressed as $k \times T_N + n \times N \times T_N + 2z/v$ (n being an integer). The phase calculated at the point of the distance z is expressed as follows.

[Math. 1-2]

$$\theta_k \left( z, kT_N + nNT_N + \frac{2z}{v} \right) \qquad (1-2)$$

Here, the measurement time at the measuring instrument is explicitly expressed.

In this embodiment, the phase $\theta(z, mT_N+2z/v)$ at the measurement time $mT_N+2z/v$ (m being an integer) is calculated as shown below, using k and n, which satisfy $mT_N + 2z/v = kT_N + nNT_N + 2z/v$.

[Math. 1-3]

$$\theta\left(z, mT_N + \frac{2z}{v}\right) = \theta_k\left(kT_N + nNT_N + \frac{2z}{v}\right) \qquad (1-3)$$

The phase change, caused by vibration applied to the section from a distance $z_1$ to a distance $z_2$ on the measurement target optical fiber 6, is then calculated as the difference between Expression (1-3a) and Expression (1-3b), or as Expression (1-3c).

[Math. 1-3a]

$$\theta\left(z_2, mT_N + \frac{2z_2}{v}\right) \qquad (1-3a)$$

$$\theta\left(z_1, mT_N + \frac{2z_1}{v}\right) \qquad (1-3b)$$

$$\theta\left(z_2, mT_N + \frac{2z_2}{v}\right) - \theta\left(z_1, mT_N + \frac{2z_1}{v}\right) \qquad (1-3c)$$

Since the time at the moment of measurement of the state of the measurement target optical fiber 6 does not include the time required for scattered light to return to the incidence end as described above, the time at the point of the distance $z_1$ is $mT_N+z_1/v$, the time at the point of the distance $z_2$ is time $mT_N+z_2/v$, and there is a time difference $(z_1-z_2)/v$ between these times. However, since the difference between the distances $z_1$ and $z_2$ is about the same as the spatial resolution and is usually set to several meters to several tens of meters, the time difference $(z_1-z_2)/v$ is several tens to several hundreds of ns, which is very short with respect to the scale of temporal changes of the normal vibration to be measured. Accordingly, the difference in time at which the state of the measurement target optical fiber 6 is measured is negligible. Thus, the vibration applied to the corresponding section can be correctly measured.

However, $\theta(z, mT_N+2z/v)$ includes a distortion term derived from an angular difference between the optical frequencies regarding the top of each pulse pair. Non Patent Literature 5 suggests a method for correcting the distortion term derived from the angular difference, using a compensation optical frequency. To completely correct the distortion term derived from the angular difference between different optical frequencies, it is necessary to correct the angular difference between the optical frequencies at the tops of two appropriate pulse pairs. When positive integers i and j satisfying i < j are selected as appropriate, the optical frequency at the top of the pulse pair j is represented by $f_j^{pf}$, and the optical frequency of the pulse pair i is represented by $f_i^{pf}$, the angular difference $\phi(z, f_j^{pf}, f_i^{pf})$ can be developed with $f_{NM+1}$ as shown below. [Math. 1-4]

$$\varphi\left(z, f_j^{pf}, f_i^{pf}\right) = \varphi\left(z, f_j^{pf}, f_{NM+1}\right) + \varphi\left(z, f_{NM+1}, f_i^{pf}\right) \qquad (1-4)$$

Here, i and j are positive integers, and satisfy i < j.

In the pulse pair 203 optical frequency combination that is used as an example, the optical frequency $f_{NM+1}$ is added to the pulse pairs with the pulse pair numbers $1+k(N+1)$ (k = 0, 1, ..., (N-1)). Accordingly, a pulse pair where the optical frequency $f_{NM+1}$ exists and a pulse pair different optical frequency or frequencies exist always become the same once within the period $N(N+1)T_N$. For example, given N = 3 and M = 1, the number of pulse pairs constituting the pulse pattern is 12. In this example, the first pulse pair includes the optical frequency $f_1$ and the optical frequency $f_4$, the fifth pulse pair includes the optical frequency $f_2$ and the optical frequency $f_4$, and the ninth pulse pair includes the optical frequency $f_3$ and the optical frequency $f_4$. Accordingly, in the pulse pattern, a pulse pair where the optical frequency $f_4$ exists and a pulse pair where one of the other frequencies $f_1$, $f_2$, and $f_3$ exists always become the same once. Thus, each term on the right-hand side of Expression (1-4) can be calculated by the same principle as the method disclosed in Patent Literature 1. With the use of the obtained value of $\phi(z, f_j^{pf}, f_i^{pf})$, the phase is calculated from $\theta(z, mT_N+2z/v)$ For example, when the change in phase from the time $m'T_N+2z/v$ to $mT_N+2z/v$ is calculated, Expression (1-5) should be used. [Math. 1-5]

$$\Delta\theta(z, m' \, T_N + \frac{2z}{v}, mT_N + \frac{2z}{v})$$

$$= \theta\left(z, m' \, T_N + \frac{2z}{v}\right) - \theta\left(z, mT_N + \frac{2z}{v}\right) - \varphi\left(z, f^{pf}_{i(m')}, f^{pf}_{i(m)}\right) \qquad (1-5)$$

However, the integer i(m') is selected so that m'-i(m') is an integral multiple of N, and the integer i(m) is selected so that m-i(m) is an integral multiple of N. As for the actual calculation procedures, a phase difference between two points is calculated, so that a phase change caused in the section between the two points is calculated. In view of this, a phase change caused in the section between a distance 1 and a distance l+δl from the incidence end can be calculated according to Expression (1-6), with the reference being time zero as in Expression (1-3c), for example. On the left-hand side of Expression (1-6), δθ represents the difference between two points, and therefore, the symbol of delta δ is added, and the subscript 0 indicates that time zero is used as the reference. Also, on the left-hand side, a delay associated with propagation of light in the measurement target optical fiber 6 is simplified in a format that is not explicitly expressed.

[Math. 1-6]

$$\delta\theta_0(l, mT_N) = \Delta\theta\left(l + \delta l, mT_N + \frac{2(l+\delta l)}{v}, \frac{2(l+\delta l)}{v}\right) - \Delta\theta\left(l, mT_N + \frac{2l}{v}, \frac{2l}{v}\right)$$

$$= \left[\theta\left(l + \delta l, mT_N + \frac{2(l+\delta l)}{v}\right) - \theta\left(l + \delta l, \frac{2(l+\delta l)}{v}\right) - \varphi\left(l + \delta l, f^{pf}_{i(m)}, f^{pf}_{i(0)}\right)\right]$$

$$- \left[\theta\left(l, mT_N + \frac{2l}{v}\right) - \theta\left(l, \frac{2l}{v}\right) - \varphi\left(l, f^{pf}_{i(m)}, f^{pf}_{i(0)}\right)\right] \qquad (1-6)$$

The processes described so far are the signal processing to be performed by the signal processing unit 17d.

A signal processing unit 17e performs the eventual phase calculation. The procedures to be carried out by the signal processing unit 17e differ between a conventional method and the present disclosure.

By a conventional method, a phase connection process is performed on the above $\delta\theta_0(l, mT_N)$, to obtain the eventual vibration change. That is, $\delta\theta_0^{unwrap}(l, mT_N)$ obtained by performing a phase connection process on $\delta\theta_0(l, mT_N)$ is set as the eventual vibrational waveform. The superscript "unwrap" indicates that the phase connection process has been performed. However, the multiplexing number allocated to improvement of the sampling rate increases in detecting high-frequency vibration or the like. An AD board with a small sampling rate needs to be used, and an available total frequency bandwidth is limited. It is necessary to perform measurement with high spatial resolution, and the occupied bandwidth per component becomes wider so as to reduce the pulse width of each frequency component. When the multiplexing number allocated to the reduction of fading noise becomes smaller in such a situation, sufficient fading noise reduction cannot be performed. As a result, the accuracy of estimation of the angular difference $\phi(z, f_j^{pf}, f_i^{pf})$ is degraded, the correction of the angular difference between the respective main optical frequencies described in Background Art cannot be completely performed, the distortion resulting from the angular difference between the respective main optical frequencies remains, and a point where the calculated phase change remains distorted with respect to the actual phase change appears.

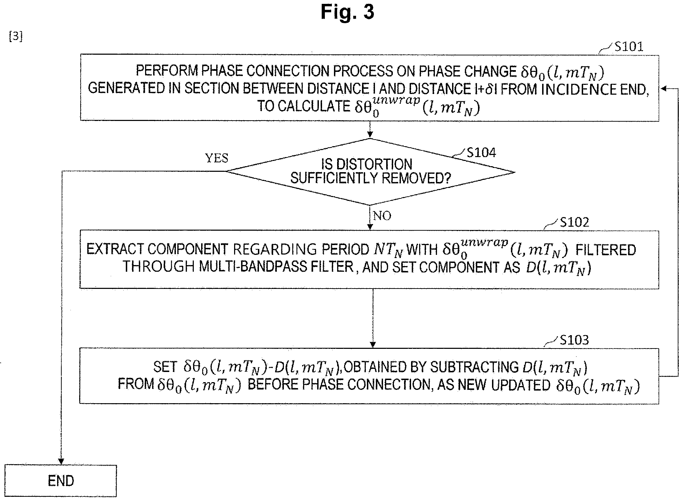

In the present disclosure, as a countermeasure for the above problem, calculation for removing the distortion remaining, after the process performed by the signal processing unit 17d, is performed. The procedures are shown in Fig. 3.

A phase change $\delta\theta_0(l, mT_N)$ caused in the section between the distance 1 and the distance l+δl from the incidence end is subjected to a phase connection process, to calculate $\delta\theta_0^{unwrap}(1, mT_N)$ (S101).

A component regarding the period $NT_N$ is extracted with $\delta\theta_0^{unwrap}(1, mT_N)$ filtered through the bandpass filter, and is set as D(l, mT_N) (S102).

$\delta\theta_0(l, mT_N)$ - D(l, mT_N), obtained by subtracting D(l, mT_N) from $\delta\theta_0(l, mT_N)$ before phase connection, is set as new updated $\delta\theta_0(l, mT_N)$ (S103).

A phase connection process is performed on the new $\delta\theta_0(1, mT_N)$ (S101).

When the distortion has not been sufficiently removed (S104), the above procedures are repeated.

The remaining distortion is removed through such procedures.

The reason that the distortion can be removed, using a bandpass filter, with the use of D(l, mT_N), which is a component regarding the period $NT_N$, is because the distortion changes in the period $NT_N$. The period $NT_N$ is a period in which the same optical frequencies repeat in a plurality of light pulses, and is period in which the top frequency $f_{i(m)}{}^{pf}$ of a pulse pair i(m) is switched, for example. When the difference between the estimated value of $\phi(z, f_j{}^{pf}, f_i{}^{pf})$ at the signal processing unit 17d and the actual value is expressed as $\delta\phi(z, f_j{}^{pf}, f_i{}^{pf})$, the distortion, remaining in $\delta\theta_0(l, mT_N)$ calculated by the signal processing unit 17d, is expressed according to Expression (1-6) as shown below.

[Math. 7]

$$\delta\varphi\left(1 + \delta l, f_{i(m)}^{pf}, f_{i(0)}^{pf}\right) - \delta\varphi\left(l, f_{i(m)}^{pf}, f_{i(0)}^{pf}\right) \qquad (7)$$

The distortion expressed by Expression (7) depends on the top frequency $f_{i(m)}{}^{pf}$ of the pulse pair i(m), but the top frequency $f_{i(m)}{}^{pf}$ of the pulse pair i(m) is switched per period $NT_N$. Therefore, the distortion expressed by Expression (7) is a component that changes per period $NT_N$, the distortion expressed by Expression (7) can be estimated by extracting the component that changes per period $NT_N$ from $\delta\theta_0{}^{unwrap}(l, mT_N)$.

Note that the distortion term does not necessarily change in a sinusoidal waveform, and therefore, attention should be paid to the fact that all the components to be passed through the bandpass filter are harmonic components whose frequencies correspond to integral multiples of $1/NT_N$. With aliasing being taken into consideration, components exceeding the Nyquist frequency should be subjected to band-passing at a component position on the frequency axis that is returned within the Nyquist frequency range or lower. However, the harmonic components regarding $1/NT_N$ within the frequency range in which aliasing does not occur overlaps with the position on the frequency axis, and therefore, a multi-bandpass filter that substantially passes all harmonic components regarding $1/NT_N$ in the frequency range in which aliasing does not occur is used.

The reason that a component that changes per period $NT_N$ is extracted with $\delta\theta_0{}^{unwrap}(1, mT_N)$, after the phase connection instead of $\delta\theta_0(l, mT_N)$ before the phase connection, filtered through the bandpass filter is because $\delta\theta_0(l, mT_N)$ before the phase connection has the phase value convolved therein from $-\pi$ to $+\pi$. This is because the distortion expressed by Expression (7) is added to and convolved in the actual vibration change, and therefore, the distortion expressed by Expression (7) cannot be extracted using the bandpass filter.

Also, the distortion is not always sufficiently removed by just one operation of calculating $D(l, mT_N)$ and obtaining the difference with respect to $\delta\theta_0(l, mT_N)$ calculated by the signal processing unit 17d. This is because, at a point where a plurality of phase connection errors occur in $\delta\theta_0{}^{unwrap}(1, mT_N)$ due to the large distortion expressed by Expression (7), the steep phase change, which is due to the phase connection errors, also has a component regarding the period $NT_N$. Therefore, even though the component regarding the period $NT_N$ is extracted with $\delta\theta_0{}^{unwrap}(1, mT_N)$ filtered through the bandpass filter, the distortion expressed by Expression (7) cannot be accurately estimated. This is based on the principle that, by repeating the calculation loop as in the procedures shown in Fig. 3, it is possible to reduce phase connection errors occurring in $\delta\theta_0{}^{unwrap}(1, mT_N)$, and increase the distortion estimation accuracy shown in Expression (7).

As for the determination whether the distortion is sufficiently removed in step S104, considering that the number of phase connection errors is countable, a time when the number of phase connection errors does not change in accordance with the procedures can be selected. Considering that it is not possible to do so, on the basis of the steep phase change caused by phase connection errors increases noise on the low-frequency side of the measurement band, a time when noise reduction on the low-frequency side is not observed through the procedures can be also selected. The number of loops is only required to be about ten as a specific numerical value estimated from verification experiments.

Although the above embodiment illustrates an example in which the present disclosure is applied with a compensation optical frequency used, the present disclosure can also be applied according to a similar principle even with no compensation optical frequency used. When no compensation optical frequency is used, the present disclosure is applied to a phase change that is obtained by calculating the difference between two points with respect to $\theta(z, mT_N+2z/v)$ before distortion correction using a signal of a compensation optical frequency.

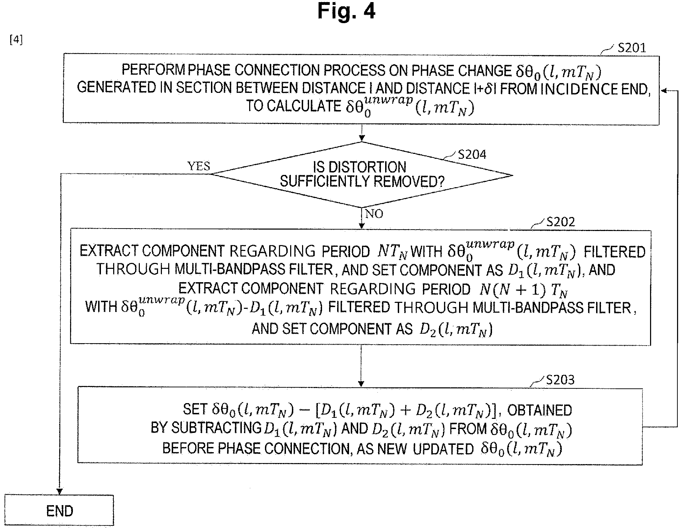

When measurement using a compensation optical frequency, distortion resulting from crosstalk of the compensation optical frequency into the main optical frequency also occurs, but removal thereof can be considered in the same manner. Fig. 4 illustrates the procedures to be carried out where the distortion caused by crosstalk of a compensation optical frequency into the main optical frequency is also removed.

A phase change $\delta\theta_0(l, mT_N)$ caused in the section between the distance 1 and the distance $l+\delta l$ from the incidence end is subjected to a phase connection process, to calculate $\delta\theta_0{}^{unwrap}(1, mT_N)$ (S201).

A component regarding the period $NT_N$ is extracted with $\delta\theta_0{}^{unwrap}(l, mT_N)$ filtered through the bandpass filter, and is set as $D_1(1, mT_N)$ (S202). A component regarding the period $N(N+1)T_N$ is also extracted from $\delta\theta_0{}^{unwrap}(l, mT_N) - D_1(l, mT_N)$ through the bandpass filter, and is set as $D_2(l, mT_N)$ (S202).

$\delta\theta_0(l, mT_N) - D_1(l, mT_N) - D_2(l, mT_N)$, obtained by subtracting $D_1(l, mT_N)$ and $D_2(l, mT_N)$ from $\delta\theta_0(l, mT_N)$ before phase connection, is set as new updated $\delta\theta_0(l, mT_N)$ (S203).

The new $\delta\theta_0(l, mT_N)$ is subjected to a phase connection process, to calculate $\delta\theta_0^{unwrap}(l, mT_N)$ (S201).

When the distortion is not been sufficiently removed (S204), the above procedures are repeated.

Through these procedures, the distortion caused by crosstalk of a compensation optical frequency into the main optical frequency can be removed at the same time.

The principle of the process using $D_1(l, mT_N)$ is the same as the principle of the process using $D(l, mT_N)$ for removing the remaining distortion that is caused by the angular difference between the respective main optical frequencies and is unremovable by the process performed by the signal processing unit 17d. Meanwhile, the process using $D_2(l, mT_N)$ corresponds to the removal of the distortion caused by crosstalk of the compensation optical frequency into the main optical frequency. The distortion resulting from crosstalk of the compensation optical frequency into the main optical frequency occurs in the period of the pulse pattern that has been used. Since the period of the pulse pattern is $N(N+1)T_N$ as illustrated in Fig. 2, the distortion associated with the crosstalk can be estimated by extracting a component regarding the period $N(N+1)T_N$ with $\delta\theta_0^{unwrap}(l, mT_N)$ filtered through the bandpass filter.

Note that, since the distortion caused by the crosstalk is not a sinusoidal waveform, it is necessary to use a multi-bandpass filter through which all the harmonic components having frequencies corresponding to integral multiples of $1/\{N(N+1)T_N\}$ passes in actual bandpass filtering. However, since the harmonic components corresponding to integral multiples of $1/\{N(N+1)T_N\}$ include a harmonic component regarding $1/(NT_N)$, it is necessary in practice to calculate $D_2(l, mT_N)$ using a multi-bandpass filter through which all the components except for the harmonic component regarding $1/(NT_N)$ among the harmonic components corresponding to integral multiples of $1/\{N(N+1)T_N\}$ passes. Therefore, in the procedures described above, the component regarding the period $N(N+1)T_N$ is also extracted from $\delta\theta_0^{unwrap}(l, mT_N) - D_1(l, mT_N)$ with the bandpass filter, and is and set as $D_2(l, mT_N)$. Alternatively, since $D_1(l, mT_N)$ and $D_2(l, mT_N)$ are not individually used in the procedures illustrated in Fig. 4, it is also possible to extract $D_1(l, mT_N) + D_2(l, mT_N)$ using a multi-bandpass filter through which all the harmonic components corresponding to integral multiples of $1/\{N(N+1)T_N\}$ passes, which is a simpler method in actual signal processing.

The reason that bandpass filtering is performed on $\delta\theta_0^{unwrap}(1, mT_N)$, and the reason that the calculation loop is repeated are the same as those in the procedures illustrated in Fig. 3.

Note that the present disclosure is not limited to the embodiment described above without any change, but can be embodied by modifying the components without departing from the scope of the invention at the implementation stage.

Industrial Applicability

The present disclosure can be applied to information and communication industries.

Reference Signs List

    1: CW light source
    2: coupler
    3: optical modulator
    4: light pulse
    5: circulator
    6: measurement target optical fiber
    7: 90-degree optical hybrid
    8, 9: coupler
    10: phase shifter
    11, 12: coupler
    13, 14: balance detector
    15: analog in-phase component electrical signal
    16: analog quadrature component electrical signal
    17: signal processing device
    17a, 17b: AD conversion element
    17c, 17d: signal processing unit
    31: measuring instrument

**Claims**

**1.** A signal processing device (17) that

acquires a signal obtained by repeatedly injecting a plurality of light pulses (4) with different optical frequencies into an optical fiber (6), and by performing distributed acoustic sensing-phase,DAS-P;
calculates a phase change, caused by vibration applied to a section of the optical fiber (6), using the acquired signal;
removes, from the calculated phase change, a component regarding a repetition period of the same optical frequency of the plurality of light pulses (4); and
calculates the vibration applied to the section of the optical fiber (6), using a phase change obtained by removing the component regarding the period.

2. The signal processing device (17) according to claim 1, wherein

the plurality of light pulses (4) includes a plurality of pulse pairs including a component regarding a main optical frequency and a component regarding a compensation optical frequency;
the phase change in the section of the optical fiber (6) is calculated from an optical phase measured at the main optical frequency included in the plurality of pulse pairs;
the component regarding the repetition period of the same optical frequency of the plurality of light pulses (4) is removed from the calculated phase change; and
an angular difference between the component regarding the main optical frequency, obtained by removing the component regarding the repetition period of the same optical frequency of the plurality of light pulses (4), and the component regarding the compensation optical frequency is corrected to be a component regarding the main optical frequency, obtained by removing the component regarding the repetition period of the same optical frequency of plurality of light pulses (4) has been removed.

3. The signal processing device (17) according to claim 2, wherein

a component regarding a period of a pulse pattern of the pulse pairs is removed from the calculated phase change; and
an angular difference between the component regarding the main optical frequency, obtained by removing the component regarding the period of the pulse pattern of the pulse pairs, and the component regarding the compensation optical frequency is corrected to be a component regarding the main optical frequency, obtained by removing the component regarding the period of the pulse pattern of the pulse pairs.

4. A vibration detection system comprising:

a measuring instrument (31) that injects a plurality of light pulses (4) with different optical frequencies into one end of an optical fiber (6), and receives scattered light with the respective wavelengths returned to the one end of the optical fiber (6); and
the signal processing device (17) according to any one of claims 1 to 3, which calculates the vibration applied to the section of the optical fiber (6), using a signal from the measuring instrument (31).

5. A signal processing method comprising:

acquiring a signal obtained by repeatedly injecting a plurality of light pulses (4) with different optical frequencies into an optical fiber (6), and by performing distributed acoustic sensing-phase, DAS-P;
calculating a phase change, caused by vibration applied to a section of the optical fiber (6), using the acquired signal;
removing, from the calculated phase change, a component regarding a repetition period of the same optical frequency repeat of the plurality of light pulses (4); and
calculating the vibration applied to the section of the optical fiber (6), using a phase change obtained by removing the component regarding the period.

**Patentansprüche**

1. Eine Signalverarbeitungsvorrichtung (17), die

ein Signal erfasst, das dadurch erhalten wird, dass wiederholt eine Mehrzahl von Lichtpulsen (4) mit unterschiedlichen optischen Frequenzen in eine optische Faser (6) injiziert wird und eine verteilte akustische Messphase (DAS-P) durchgeführt wird;

eine Phasenänderung berechnet, die durch eine auf einen Abschnitt der optischen Faser (6) einwirkende Vibration verursacht ist, unter Verwendung des erfassten Signals;

aus der berechneten Phasenänderung eine Komponente entfernt, die eine Wiederholungsperiode derselben optischen Frequenz der Mehrzahl von Lichtpulsen (4) betrifft; und

die auf den Abschnitt der optischen Faser (6) einwirkende Vibration unter Verwendung einer Phasenänderung berechnet, die durch Entfernen der Komponente, die die Wiederholungsperiode betrifft, erhalten wird.

2. Die Signalverarbeitungsvorrichtung (17) nach Anspruch 1, wobei

die Mehrzahl von Lichtpulsen (4) eine Mehrzahl von Pulspaaren umfasst, die eine Haupt-Optikfrequenz betreffende Komponente und eine Kompensations-Optikfrequenz betreffende Komponente umfasst;

die Phasenänderung in dem Abschnitt der optischen Faser (6) aus einer optischen Phase berechnet wird, die bei der in der Mehrzahl von Pulspaaren umfassten Haupt-Optikfrequenz gemessen wird;

aus der berechneten Phasenänderung die Komponente entfernt wird, die eine Wiederholungsperiode derselben optischen Frequenz der Mehrzahl von Lichtpulsen (4) betrifft; und

eine Winkelabweichung zwischen der die Haupt-Optikfrequenz betreffenden Komponente, die durch Entfernen der Komponente, die die Wiederholungsperiode derselben optischen Frequenz der Mehrzahl von Lichtpulsen (4) betrifft, erhalten wird, und der die Kompensations-Optikfrequenz betreffenden Komponente derart korrigiert wird, dass sie einer die Haupt-Optikfrequenz betreffenden Komponente entspricht, bei der die Komponente, die die Wiederholungsperiode derselben optischen Frequenz der Mehrzahl von Lichtpulsen (4) betrifft, entfernt worden ist.

3. Die Signalverarbeitungsvorrichtung (17) nach Anspruch 2, wobei

aus der berechneten Phasenänderung eine Komponente entfernt wird, die eine Periode eines Pulsmusters der Pulsepaare betrifft; und

eine Winkelabweichung zwischen der die Haupt-Optikfrequenz betreffenden Komponente, die durch Entfernen der Komponente, die die Periode des Pulsmusters der Pulsepaare betrifft, erhalten wird, und der die Kompensations-Optikfrequenz betreffenden Komponente derart korrigiert wird, dass sie einer die Haupt-Optikfrequenz betreffenden Komponente entspricht, die durch Entfernen der Komponente, die die Periode des Pulsmusters der Pulsepaare betrifft, erhalten wird.

4. Ein Vibrationsdetektionssystem, umfassend:

ein Messinstrument (31), das eine Mehrzahl von Lichtpulsen (4) mit unterschiedlichen optischen Frequenzen in ein Ende einer optischen Faser (6) injiziert und zu dem einen Ende der optischen Faser (6) zurückkehrendes Streulicht mit den jeweiligen Wellenlängen empfängt; und

die Signalverarbeitungsvorrichtung (17) nach einem der Ansprüche 1 bis 3, die die auf den Abschnitt der optischen Faser (6) einwirkende Vibration unter Verwendung eines Signals des Messinstruments (31) berechnet.

5. Ein Signalverarbeitungsverfahren, umfassend:

Erfassen eines Signals, das dadurch erhalten wird, dass eine Mehrzahl von Lichtpulsen (4) mit unterschiedlichen optischen Frequenzen wiederholt in eine optische Faser (6) injiziert wird und eine verteilte akustische Messphase (DAS-P) durchgeführt wird;

Berechnen einer Phasenänderung, die durch eine auf einen Abschnitt der optischen Faser (6) einwirkende Vibration verursacht ist, unter Verwendung des erfassten Signals;

Entfernen aus der berechneten Phasenänderung einer Komponente, die die Wiederholungsperiode derselben optischen Frequenz der Mehrzahl von Lichtpulsen (4) betrifft; und

Berechnen der auf den Abschnitt der optischen Faser (6) einwirkenden Vibration unter Verwendung einer Phasenänderung, die durch Entfernen der die Wiederholungsperiode betreffenden Komponente erhalten wird.

**Revendications**

1. Dispositif de traitement du signal (17) qui

   acquiert un signal obtenu par injection répétée d'une pluralité d'impulsions lumineuses (4) avec des fréquences optiques différentes dans une fibre optique (6), et par réalisation d'une détection acoustique distribuée basée sur la phase, DAS-P ;
   calcule un changement de phase provoqué par une vibration appliquée à une section de la fibre optique (6) en utilisant le signal acquis ;
   supprime du changement de phase calculé une composante concernant une période de répétition de la même fréquence optique de la pluralité d'impulsions lumineuses (4) ; et
   calcule la vibration appliquée à la section de la fibre optique (6) en utilisant un changement de phase obtenu par suppression de la composante concernant la période.

2. Dispositif de traitement du signal (17) selon la revendication 1, dans lequel

   la pluralité d'impulsions lumineuses (4) comporte une pluralité de paires d'impulsions comportant une composante concernant une fréquence optique principale et une composante concernant une fréquence optique de compensation ;
   le changement de phase dans la section de la fibre optique (6) est calculé à partir d'une phase optique mesurée à la fréquence optique principale contenue dans la pluralité de paires d'impulsions ;
   la composante concernant la période de répétition de la même fréquence optique de la pluralité d'impulsions lumineuses (4) est supprimée du changement de phase calculé ; et
   une différence angulaire entre la composante concernant la fréquence optique principale, obtenue par suppression de la composante concernant la période de répétition de la même fréquence optique de la pluralité d'impulsions lumineuses (4), et la composante concernant la fréquence optique de compensation est corrigée pour être une composante concernant la fréquence optique principale, obtenue par suppression de la composante concernant la période de répétition de la même fréquence optique de la pluralité d'impulsions lumineuses (4) a été supprimée.

3. Dispositif de traitement du signal (17) selon la revendication 2, dans lequel

   une composante concernant une période d'un motif d'impulsions des paires d'impulsions est supprimée du changement de phase calculé ; et
   une différence angulaire entre la composante concernant la fréquence optique principale, obtenue par suppression de la composante concernant la période du motif d'impulsions des paires d'impulsions, et la composante concernant la fréquence optique de compensation est corrigée pour être une composante concernant la fréquence optique principale, obtenue par suppression de la composante concernant la période du motif d'impulsions des paires d'impulsions.

4. Système de détection de vibrations comprenant :

   un instrument de mesure (31) qui injecte une pluralité d'impulsions lumineuses (4) avec des fréquences optiques différentes dans une extrémité d'une fibre optique (6), et reçoit la lumière diffusée avec les longueurs d'onde respectives renvoyées à l'extrémité de la fibre optique (6) ; et
   le dispositif de traitement du signal (17) selon l'une quelconque des revendications 1 à 3, qui calcule la vibration appliquée à la section de la fibre optique (6) en utilisant un signal provenant de l'instrument de mesure (31).

5. Procédé de traitement du signal comprenant :

   l'acquisition d'un signal obtenu par injection répétée d'une pluralité d'impulsions lumineuses (4) avec des fréquences optiques différentes dans une fibre optique (6), et par réalisation d'une détection acoustique distribuée basée sur la phase, DAS-P ;
   le calcul d'un changement de phase provoqué par une vibration appliquée à une section de la fibre optique (6) au moyen du signal acquis ;
   la suppression du changement de phase calculé d'une composante concernant une période de répétition de la même répétition de fréquences optiques de la pluralité d'impulsions lumineuses (4) ; et
   le calcul de la vibration appliquée à la section de la fibre optique (6) au moyen d'un changement de phase obtenu par suppression de la composante concernant la période.

# Fig. 1

[1]

FREQUENCY $f_0$

1

2

3

4

5

6

7

8

9

10

11

12

13

14

15

16

17

17a

17b

17c

17d

17e

31

# Fig. 2

[2]

(a) 201

FIRST GROUP　　SECOND GROUP　　(N+1) TH GROUP

$$f_1, f_2, \ldots, f_{NM}, f_1, f_2, \ldots, f_{NM}, \ldots, f_1, f_2, \ldots, f_{NM}$$

(b) 202

PULSE PAIR 1　PULSE PAIR 2　　　　　PULSE PAIR N　　PULSE PAIR N+1　　PULSE PAIR N(N+1)

$$(f_1, f_2, \ldots, f_M)(f_{M+1}, f_{M+2}, \ldots, f_{2M}) \ldots (f_{(N-1)M+1}, f_{(N-1)M+2}, \ldots, f_{NM})(f_1, f_2, \ldots, f_M) \ldots (f_{(N-1)M+1}, f_{(N-1)M+2}, \ldots, f_{NM})$$

(c) 203

PULSE PAIR 1　　　　PULSE PAIR 1+(N+1)　　PULSE PAIR 1+(N-1)(N+1)

$$(f_1, \ldots, f_M, f_{NM+1}) \ldots (f_{M+1}, \ldots, f_{2M}, f_{NM+1}) \ldots (f_{(N-1)M+1}, \ldots, f_{NM}, f_{NM+1}) \ldots (f_{(N-1)M+1}, f_{(N-1)M+2}, \ldots, f_{NM})$$

ADDED　　　　　　ADDED　　　・・・　　ADDED　　($f_{MN+1}$ IS ADDED TO EACH PULSE PAIR N+1)

(d) 204

$f_1$ $f_2$ $f_{NM+1}$ $f_{M+1}$ $f_{M+2}$ $f_{2M}$　$f_{(N-1)M+2}$ $f_{NM}$　$f_1$ $f_2$ $f_{NM+1}$ $f_{M+1}$ $f_{M+2}$ $f_{2M}$

$T_N$　　　$T_N$　　　$T_N$

・・・　　・・・　　・・・　　・・・　　・・・　　・・・　　・・・

→ TIME

PULSE PAIR 1　PULSE PAIR 2　　PULSE PAIR N(N+1)　PULSE PAIR 1　PULSE PAIR 2

PATTERN

# Fig. 3

[3]

PERFORM PHASE CONNECTION PROCESS ON PHASE CHANGE $\delta\theta_0(l, mT_N)$ GENERATED IN SECTION BETWEEN DISTANCE I AND DISTANCE I+$\delta$I FROM INCIDENCE END, TO CALCULATE $\delta\theta_0^{unwrap}(l, mT_N)$ ⟋S101

IS DISTORTION SUFFICIENTLY REMOVED? ⟋S104

YES

NO

EXTRACT COMPONENT REGARDING PERIOD $NT_N$ WITH $\delta\theta_0^{unwrap}(l, mT_N)$ FILTERED THROUGH MULTI-BANDPASS FILTER, AND SET COMPONENT AS $D(l, mT_N)$ ⟋S102

SET $\delta\theta_0(l, mT_N)$-$D(l, mT_N)$,OBTAINED BY SUBTRACTING $D(l, mT_N)$ FROM $\delta\theta_0(l, mT_N)$ BEFORE PHASE CONNECTION, AS NEW UPDATED $\delta\theta_0(l, mT_N)$ ⟋S103

END

# Fig. 4

[4]

PERFORM PHASE CONNECTION PROCESS ON PHASE CHANGE $\delta\theta_0(l, mT_N)$
GENERATED IN SECTION BETWEEN DISTANCE I AND DISTANCE I+$\delta$I FROM INCIDENCE END,
TO CALCULATE $\delta\theta_0^{unwrap}(l, mT_N)$
 $\diagup$ S201

IS DISTORTION
SUFFICIENTLY REMOVED?
 $\diagup$ S204

YES

NO

EXTRACT COMPONENT REGARDING PERIOD $NT_N$ WITH $\delta\theta_0^{unwrap}(l, mT_N)$ FILTERED
THROUGH MULTI-BANDPASS FILTER, AND SET COMPONENT AS $D_1(l, mT_N)$, AND
EXTRACT COMPONENT REGARDING PERIOD $N(N + 1) T_N$
WITH $\delta\theta_0^{unwrap}(l, mT_N)$-$D_1(l, mT_N)$ FILTERED THROUGH MULTI-BANDPASS FILTER,
AND SET COMPONENT AS $D_2(l, mT_N)$
 $\diagup$ S202

SET $\delta\theta_0(l, mT_N) - [D_1(l, mT_N) + D_2(l, mT_N)]$, OBTAINED
BY SUBTRACTING $D_1(l, mT_N)$ AND $D_2(l, mT_N)$ FROM $\delta\theta_0(l, mT_N)$
BEFORE PHASE CONNECTION, AS NEW UPDATED $\delta\theta_0(l, mT_N)$
 $\diagup$ S203

END

**REFERENCES CITED IN THE DESCRIPTION**

**Patent documents cited in the description**

- JP 2020169904 A

- JP 2017026503 A

**Non-patent literature cited in the description**

- **ALI. MASOUDI** ; **T. P. NEWSON**. Contributed Review: Distributed optical fibre dynamic strain sensing. *Review of Scientific Instruments*, 2016, vol. 87, 011501
- **KEN'ICHI NISHIGUCHI** ; **LI CHE-HSIEN** ; **ARTUR GUZIK** ; **MITSUNORI YOKOYAMA** ; **KINZO KISHIDA**. Fabrication of Fiber-Optic Distributed Acoustic Sensor and Its Signal Processing. *IEICE Technical Report*, 2015, vol. 115 (202), 29-34
- **G. YANG et al.** Long-Range Distributed Vibration Sensing Based on Phase Extraction from Phase-Sensitive OTDR. *IEEE Photonics Journal*, 2016, vol. 8 (3)
- **D.** ; **IIDA, K.** ; **TOGE, T.** Manabe: 'Distributed measurement of acoustic vibration location with frequency multiplexed phase-OTDR. *Opt. Fiber Technol.*, 2017, vol. 36, 19-25

- **Y. WAKISAKA** ; **D. IIDA** ; **H. OSHIDA**. Distortion-Suppressed Sampling Rate Enhancement in Phase-OTDR Vibration Sensing with Newly Designed FDM Pulse Sequence for Correctly Monitoring Various Waveforms. *2020 Optical Fiber Communications Conference and Exhibition (OFC), San Diego, CA, USA*, 2020, 1-3
- **MARIA ROSARIO FERNANDEZ-RUIZ** ; **HUGO F. MARTINS**. Steady-Sensitivity Distributed Acoustic Sensors. *J. Lightwave Technol*, 2018, vol. 36, 5690-5696
- **C. D. BUTTER** ; **G. B. HOCKER**. Fiber optics strain gauge. *Appl. Opt.*, 1978, vol. 17, 2867-2869
- **A E ALEKSEEV et al.** Fidelity of the dual-pulse phase-OTDR response to spatially distributed external perturbation. *Laser Phys.*, 2019, vol. 29, 055106